# EUROPÄISCHE PATENTANMELDUNG

(11) **EP 2 940 816 A2**
(43) Veröffentlichungstag der Anmeldung: **04.11.2015**
(21) Anmeldenummer: 15305535.5
(22) Anmeldetag: 10.04.2015
(51) Int. Cl.: H02G 3/12

(54) **ELEKTRISCHE INSTALLATIONSVORRICHTUNG FÜR WANDBÜNDIGEN EINBAU**

(30) Priorität: 29.04.2014 DE 102014106026
(71) Anmelder: Berker GmbH & Co. KG, 58579 Schalksmühle (DE)
(72) Erfinder: Klauer, Wilfried, 58091 HAGEN (DE)
(74) Vertreter: Nuss, Laurent

(57) **Zusammenfassung**

Die Erfindung betrifft eine elektrische Installationsvorrichtung für wandbündigen Einbau. Die elektrische Installationsvorrichtung umfasst
eine Unterputzdose (50) mit einer Außenseite und einer an der Außenseite angeordneten ersten Anlagefläche,
ein Rahmenteil (60) mit einer zweiten Anlagefläche, die zumindest abschnittsweise eine zu der ersten Anlagefläche komplementäre Fläche bildet, und
einer Einbaurichtung,
wobei die erste Anlagefläche durch eine Bewegung der Unterputzdose (50) in Einbaurichtung mit der zweiten Anlagefläche in Berührung bringbar ist. Die Erfindung betrifft ferner ein Verfahren zur Montage einer elektrischen Installationsvorrichtung.

## Beschreibung

Die Erfindung betrifft eine elektrische Installationsvorrichtung für einen wandbündigen Einbau in ein Bauteil, vorzugsweise für dein Einbau in eine Wand, weiterhin vorzugsweise für den Einbau in eine Rohbauwand.

Unterputzdosen einer Installationsvorrichtung werden üblicherweise vor dem Auftragen einer Putzschicht in die Rohbauwand eingebaut und die Installationsvorrichtung nach dem Auftragen der Putzschicht zusammengefügt. Dadurch wird erschwert, die bestimmungsgemäße Lage der Installationsvorrichtung bezüglich der verputzten Wand, insbesondere der Tiefe bezüglich der verputzten Wand, beim Befestigen der Unterputzdose an der Rohbauwand präzise zu bestimmen. Diese Vorgehensweise erfordert in der Regel eine aufwendige Nachbearbeitung, um ein gutes Erscheinungsbild bei einem wandbündigen Einbau der Installationsvorrichtung zu erzielen.

Die deutsche Gebrauchsmusterschrift DE 20 2005 001 010 U1 offenbart eine Unterputzdose für den Einbau von elektrischen Geräten. Sie umfasst einen einteiligen Körper, der vor dem Verputzen in einer Wand befestigt wird. Anschließend wird die Wand bis zu einer von der Unterputzdose vorgegebenen Dicke verputzt. Nach dem Verputzen wird das elektrische Gerät in die Unterputzdose eingebaut.

Es ist die Aufgabe der vorliegenden Erfindung, eine elektrische Installationsvorrichtung bereit zu stellen, die sich in einfacher Weise in ein Bauteil einbauen lässt. Es ist eine weitere Aufgabe der vorliegenden Erfindung, eine elektrische Installationsvorrichtung bereit zu stellen, die sich in einfacher Weise und unter der Verwendung vor allem von Standardkomponenten zusammensetzen lässt. Eine weitere Aufgabe der Erfindung ist es, eine elektrische Installationsvorrichtung bereit zu stellen, die sich in einfacher Weise und sicher zusammenbauen lässt. Eine weitere Aufgabe der Erfindung ist es, einen wandbündigen Einbau der Installationsvorrichtung zu erleichtern, jedoch auch auf flexible Weise einen nichtbündigen Einbau erlaubt, wobei die Einbausart einzelweise auf der Baustelle entschieden werden kann.

Erfindungsgemäß wird diese Aufgabe durch eine Installationsvorrichtung nach Anspruch 1 und Verfahren zur Montage einer Installationsvorrichtung nach Anspruch 11 gelöst. Bevorzugte Ausgestaltungen sind Gegenstand der Unteransprüche.

Die erfindungsgemäße Installationsvorrichtung umfasst wenigstens eine Unterputzdose mit einer Außenseite und einer an der Außenseite angeordneten ersten Anlagefläche, ein Rahmenteil mit einer zweiten Anlagefläche, die zumindest abschnittsweise eine zu der ersten Anlagefläche komplementäre Fläche bildet, und einer Einbaurichtung, wobei die erste Anlagefläche durch eine Bewegung der Unterputzdose in Einbaurichtung mit der zweiten Anlagefläche in Berühning bringbar ist.

Die Installationsvorrichtung kann eine Steckdose, ein Schalter, ein Bedienelement, ein Anzeigeelement oder dergleichen sein. Die Installationsvorrichtung kann auch eine Kombination aus mehreren der zuvorgenannten Elemente sein, wie beispielsweise eine Steckdosen-Schalter-Kombination. Vorzugsweise ist die Unterputzdose eine Standardkomponente. Weiterhin vorzugsweise ist die Unterputzdose eine Unterputzdose nach DIN 49073.

Vorzugsweise verlaufen die erste Anlagefläche und die zweite Anlagefläche zumindest abschnittsweise annähernd parallel zueinander.

In einer bevorzugten Ausgestaltung verlaufen die erste Anlagefläche und die zweite Anlagefläche zumindest abschnittsweise annähernd parallel zu einer Kegelmantelfläche und/oder einer Sphäre. Alternativ oder zusätzlich können die die erste Anlagefläche und die zweite Anlagefläche zumindest abschnittsweise in einem parallel zur Einbaurichtung erfolgten Querschnitt stufenförmig und oder wellenförmig verlaufen.

Bevorzugterweise verlaufen die erste Anlagefläche und die zweite Anlagefläche im Wesentlichen schiefwinkelig zur Einbaurichtung.

Durch die zuvor genannten bevorzugten Ausgestaltungen wird insbesondere der Vorteil erzielt, dass die Unterputzdose in einfacher Weise sicher formschlüssig mit dem Rahmenteil verbunden werden kann.

Vorzugsweise weist das Rahmenteil wenigstens eine Öffnung auf, durch welche die Unterputzdose zumindest teilweise in Einbaurichtung hindurchsteckbar ist, um die erste Anlagefläche mit der zweiten Anlagefläche in Berühning zu bringen, wobei vorzugsweise die Öffnung zumindest abschnittsweise annähernd kreisförmig und/oder zumindest abschnittsweise annähernd kreisbogenförmig ausgebildet ist.

Durch diese bevorzugte Ausgestaltung wird insbesondere der Vorteil erzielt, dass die Unterputzdose in ihrer bestimmungsgemäßen Lage quer zur Einbaurichtung festgelegt ist.

In einer weiteren bevorzugten Ausgestaltung weist die Unterputzdose wenigstens ein Befestigungselement auf, wobei vorzugsweise die Installationsvorrichtung wenigstens ein Halteelement mit einer Haltefläche umfasst und wobei das Halteelement an dem Befestigungselement befestigbar ist und die Haltefläche an dem Rahmenteil anlegbar ist, um die Unterputzdose entgegen der Einbaurichtung formschlüssig fest zu halten.

Alternativ oder zusätzlich kann die Unterputzdose durch das Halteelement entgegen der Einbaurichtung kraftschlüssig an dem Rahmenteil festgehalten sein.

Durch diese Ausgestaltungen wird insbesondere die Unterputzdose sicher mit dem Rahmenteil verbunden.

Bevorzugterweise ist das Befestigungselement durch einen von der Außenseite in Radialrichtung nach Außen abragenden Vorsprung gebildet.

Dadurch wird insbesondere die Befestigung des Halteelements mit der Unterputzdose erleichtert.

Alternativ oder zusätzlich kann der Vorsprung dafür ausgebildet sein, mit einem Vorsprung einer weiteren Unterputzdose verbunden zu werden.

Dadurch kann insbesondere in einfacher Weise eine Installationsvorrichtung mit einer Kombination, beispielsweise aus einem Schalter und einer Steckdose zum Einbau nebeneinander in dem Bauteil verbunden und zueinander ausgerichtet werden.

Vorzugsweise weist die Öffnung wenigstens eine erste Ausnehmung auf, durch welche der Vorsprung in Einbaurichtung hindurchsteckbar ist.

Dadurch wird insbesondere das Verbinden der Unterputzdose mit dem Rahmenteil erleichtert.

Vorzugsweise umfasst die Unterputzdose wenigstens einen Absatz, der von der Außenseite in Radialrichtung nach Außen abragt

Vorzugsweise weist die Öffnung wenigstens eine zweite Ausnehmung auf, in welche der Absatz aufgenommen ist, wenn die erste Anlagefläche mit der zweiten Anlagefläche in Berühning ist.

Dadurch wird insbesondere der Vorteil erzielt, dass die Unterputzdose in einfacher Weise ausgerichtet werden kann, indem der Absatz an der zweiten Ausnehmung ausgerichtet wird.

In einer bevorzugten Ausgestaltung umfasst das Rahmenteil einen Basisabschnitt, der im Wesentlichen quer zur Einbaurichtung verläuft, wobei vorzugsweise die Öffnung in dem Basisabschnitt angeordnet ist.

Dadurch wird insbesondere der Einbau der Installationsvorrichtung in dem Bauteil erleichtert und die Installationsvorrichtung für den wandbündigen Einbau ausgerichtet.

Bevorzugterweise ist die Haltefläche an eine Unterseite des Basisabschnitts, vorzugsweise benachbart zur der ersten Ausnehmung, anlegbar, um die Unterputzdose entgegen der Einbaurichtung formschlüssig fest zu halten.

Vorzugsweise umfasst das Rahmenteil einen Anputzabschnitt, der im Wesentlichen parallel zur Einbaurichtung verläuft, wobei vorzugsweise der Anputzabschnitt einen Randabschnitt bildet, der im Wesentlichen in einer quer zur Einbaurichtung verlaufenden Ebene liegt

Diese Ausgestaltung erlaubt ein einfaches und sicheres Auftragen der Putzschicht auf dem Bauteil, sodass die Putzschicht bis zum Anputzabschnitt in Radialrichtung in der gewünschten Breite und bis zum Randabschnitt in Einbaurichtung in der gewünschten Tiefe aufgebracht werden kann.

Vorzugsweise ist die Installationsvorrichtung durch eine zweite Unterputzdose gekennzeichnet, die mit der Unterputzdose verbunden ist, wobei vorzugsweise die zweite Unterputzdose einen Vorsprung aufweist, der mit einem Vorsprung der Unterputzdose verbunden ist.

Dadurch kann insbesondere in einfacher Weise eine Installationsvorrichtung mit einer Kombination, beispielsweise aus einem Schalter und einer Steckdose bereitgestellt werden.

Das erfindungsgemäße Verfahren zur Montage einer elektrischen Installationsvorrichtung an ein Bauteil, vorzugsweise an eine Wand, weiterhin vorzugsweise eine Rohbauwand, umfasst folgende Verfahrensschritte:
Verbinden der Unterputzdose mit dem Rahmenteil durch in Berühning bringen der ersten Anlagefläche mit der zweiten Anlagefläche;
Verbinden der Installationsvorrichtung mit einem in dem Bauteil eingebrachten Hohlraum;

Vorzugsweise erfolgt das Verbinden der Unterputzdose mit dem Rahmenteil durch Bewegen der Unterputzdose in Einbaurichtung.

Vorzugsweise ist der Hohlraum ein Sackloch. Vorzugsweise wird der Hohlraum durch Bohren in das Bauteil eingebracht.

Bevorzugterweise wird nach dem Verbinden der Unterputzdose mit dem Rahmenteil und vor dem Verbinden der Installationsvorrichtung mit dem Hohlraum die Unterputzdose formschlüssig mit dem Rahmenteil verbunden, sodass die Unterputzdose entgegen der Einbaurichtung an dem Rahmenteil festgehalten wird.

In einer bevorzugten Ausgestaltung wird die Unterputzdose formschlüssig mit dem Rahmenteil verbunden, indem wenigstens ein Halteelement mit einem Befestigungselement der Unterputzdose verbunden wird.

Bevorzugterweise wird nach dem Verbinden der Installationsvorrichtung mit dem Hohlraum an dem Bauteil umfänglich um das Rahmenteil eine Putzschicht aufgebracht, wobei vorzugsweise die Putzschicht umfänglich um einen Anputzabschnitt des Rahmenteils an dem Bauteil aufgebracht wird, wobei weiterhin vorzugsweise die Putzschicht in Einbaurichtung bis zu einem Randabschnitt des Anputzabschnitts aufgebracht wird.

Durch die zuvor genannten bevorzugten Ausgestaltungen wird insbesondere der Vorteil erzielt, dass die wandbündige Ausrichtung der Installationsvorrichtung erleichtert wird.

Einzelheiten und weitere Vorteile der erfindungsgemäßen Installationsvorrichtung und des erfindungsgemäßen Verfahrens zur Montage einer solchen Installationsvorrichtung werden anhand der nachfolgend beschriebenen Ausführungsbeispiele erläutert. Dabei veranschaulichen im Einzelnen:
Fig. 1: eine in ein Bauteil eingebaute Installationsvorrichtung in einer perspektivischen Ansicht nach einem ersten Ausführungsbeispiel;
Fig. 2: eine perspektivische Ansicht der Unterputzdose und des Rahmens der Installationsvorrichutng nach dem ersten Ausführungsbeispiel;
Fig. 3: eine Explosionsdarstellung der Installationsvorrichtung nach dem ersten Ausführungsbeispiel;
Fig. 4: einen Querschnitt einer in ein Bauteil eingebauten Installationsvorrichtung nach dem ersten Ausführungsbeispiel.
Fig. 5: die in dem Bauteil eingebaute Installationsvorrichtung in einer perspektivischen Ansicht nach einem zweiten Ausführungsbeispiel;
Fig. 6: eine perspektivische Ansicht der Unterputzdosen und des Rahmens der Installationsvorrichutng nach dem zweiten Ausführungsbeispiel;
Fig. 7: eine Explosionsdarstellung der Installationsvorrichtung nach dem zweiten Ausführungsbeispiel;
Fig. 8: einen Querschnitt einer in ein Bauteil eingebauten Installationsvorrichtung nach dem zweiten Ausführungsbeispiel.

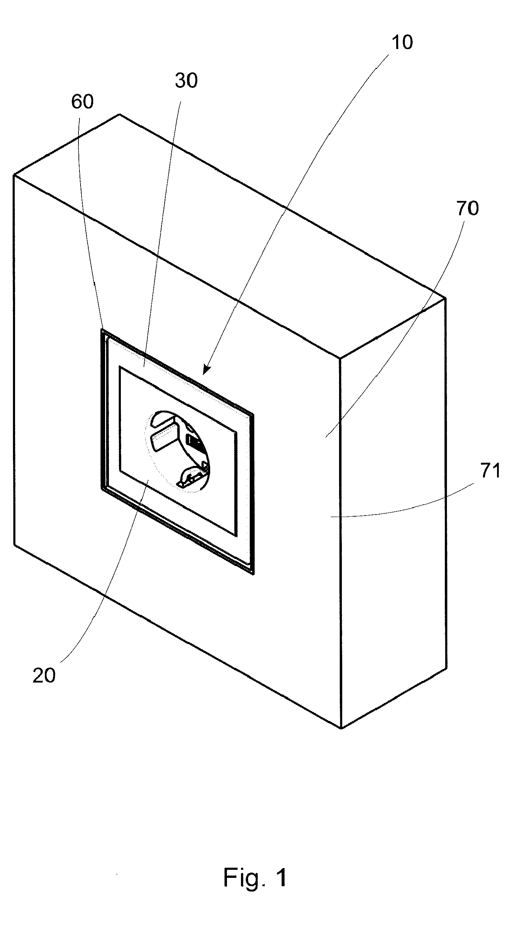

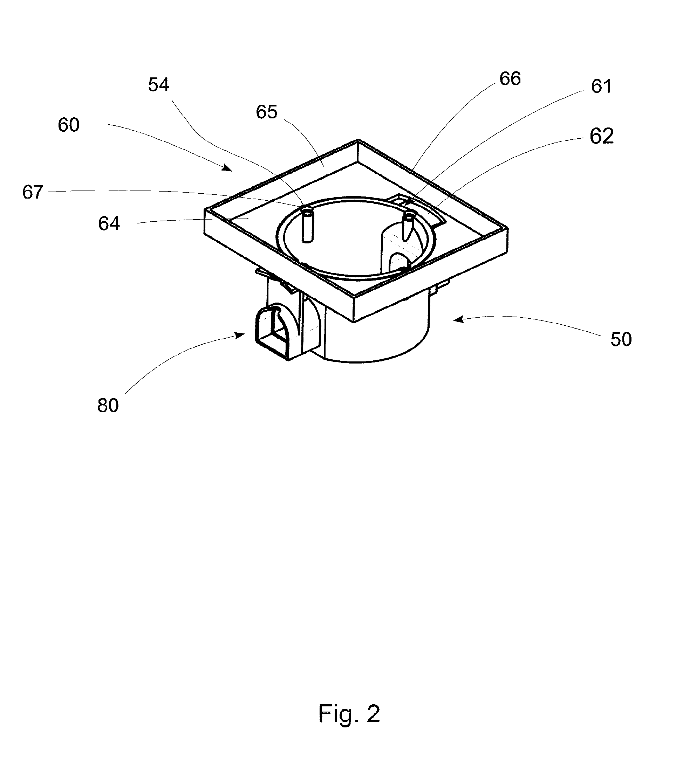

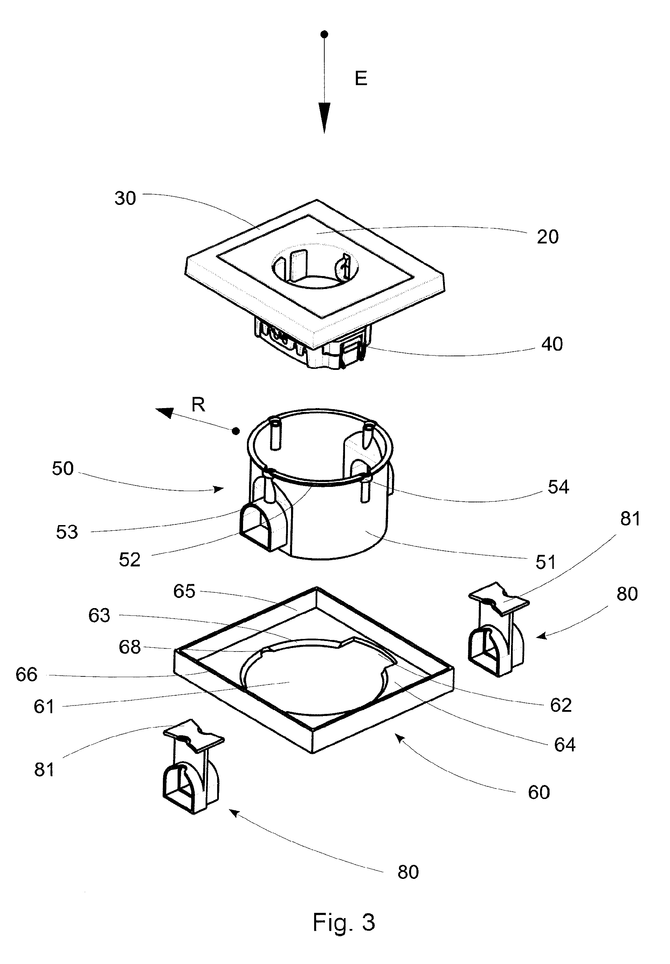

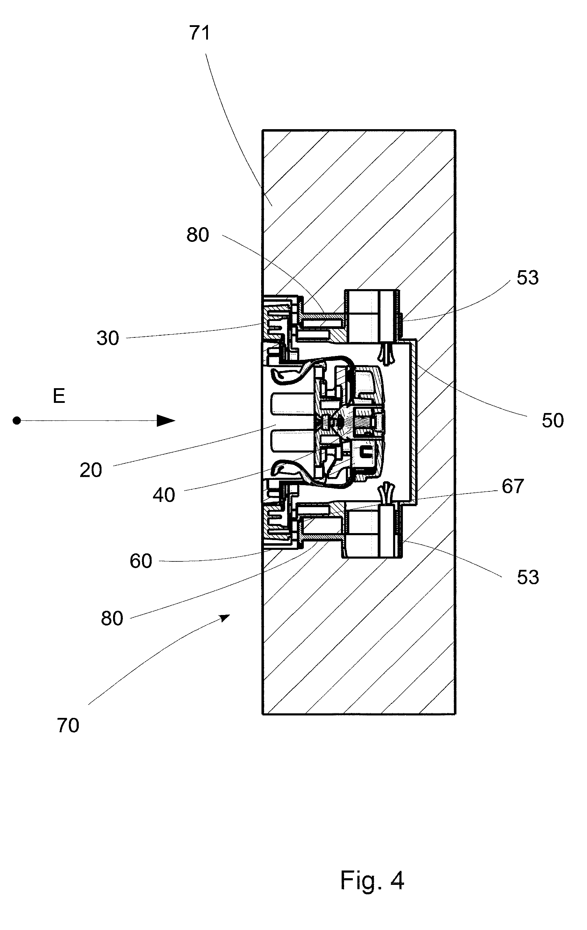

Fign. 1 bis 4 zeigen eine Installationsvorrichtung 10, die wandbündig in eine Wand 70 montiert ist. Die Installationsvorrichtung 10 aus dem Ausführungsbeispiel ist als Steckdose 10 ausgestaltet. Wie insbesondere aus Fig. 3 hervorgeht, umfasst die Steckdose 10 ein Steckdosenzentralstück 20, einen Designrahmen 30, ein Sockelteil 40, eine Unterputzdose 50 und ein Rahmenteil 60. Die Steckdose 10 kann zusätzlich ein Halteelement 80 aufweisen. Das Halteelement 80 umfasst eine Haltefläche 81.

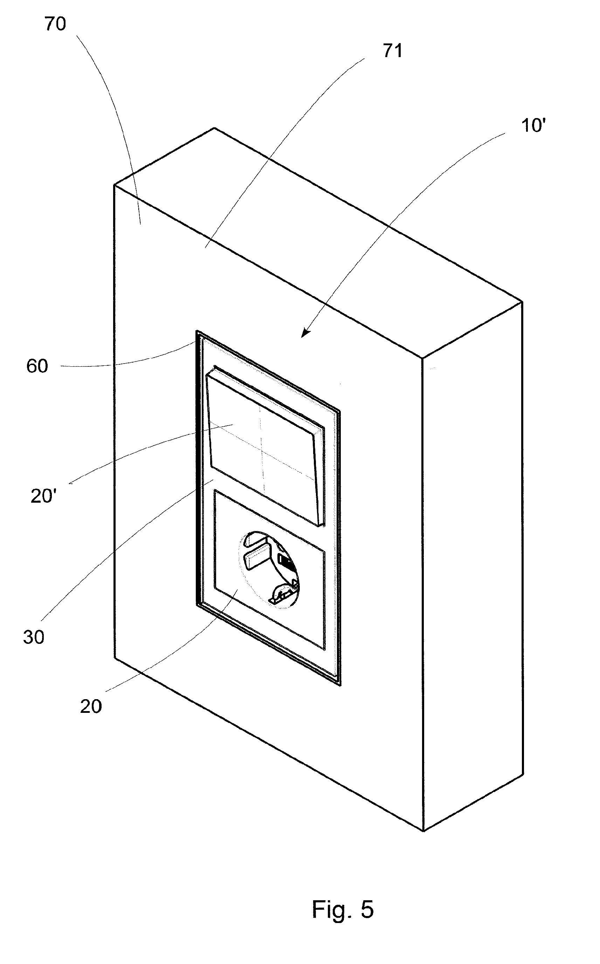

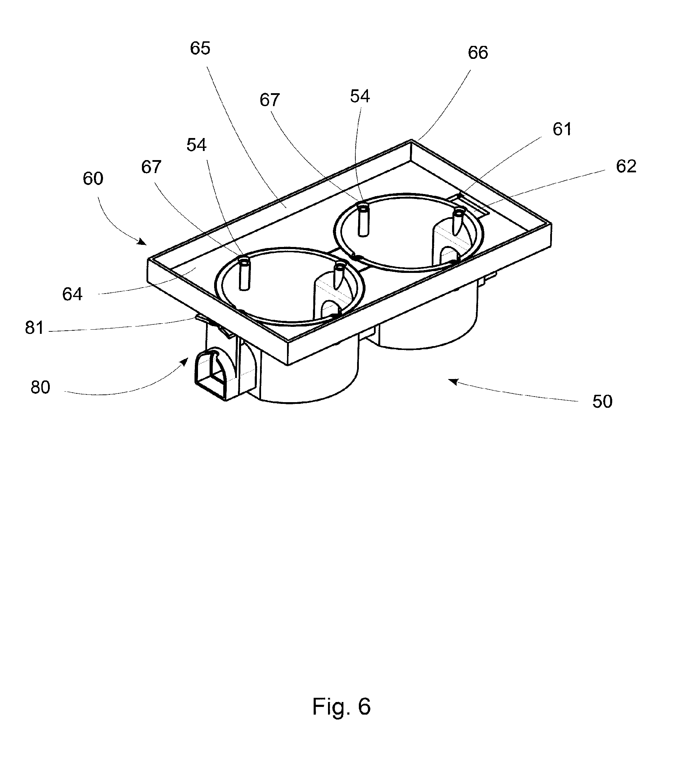

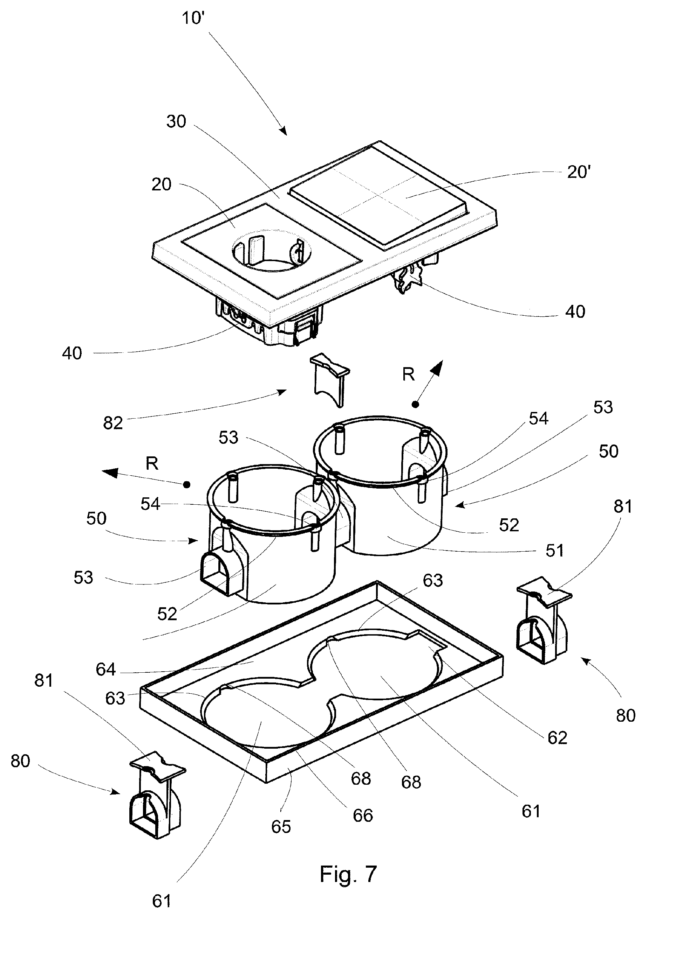

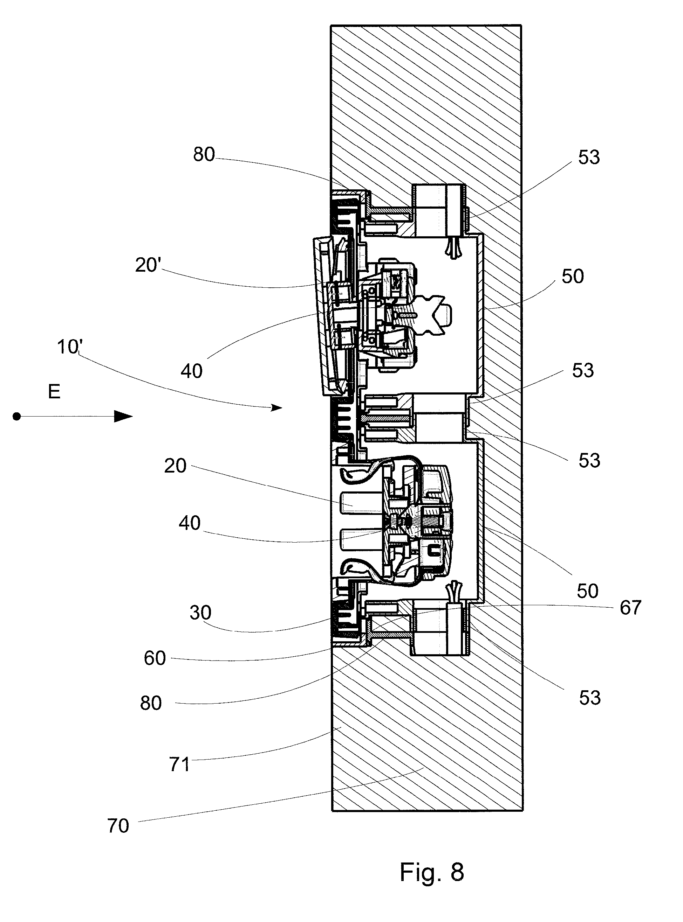

Fign. 5 bis 8 zeigen eine Installationsvorrichtung 10' nach einem zweiten Ausführungsbeispiel, die ebenfalls wandbündig in die Wand 70 montiert ist. Die Installationsvorrichtung 10' ist als Steckdosen-Schalter-Kombination 10' ausgestaltet. Wie insbesondere aus Fig. 7 hervorgeht, umfasst die Steckdosen-Schalter-Kombination 10' ein Steckdosenzentralstück 20, ein Schalterzentralstück 20' einen Designrahmen 30, zwei Sockelteile 40, eine erste Unterputzdose 50, eine zweite Unterputzdose 50' und ein Rahmenteil 60. Die Steckdosen-Schalter-Kombination 10' kann zusätzlich ein Halteelement 80 aufweisen. Das Halteelement 80 umfasst eine Haltefläche 81. Die Steckdosen-Schalter-Kombination 10' kann ferner ein Stützelement 82 aufweisen, das mit der ersten Unterputzdose 50 und/oder der zweiten Unterputzdose 50' verbunden ist und das Rahmenteil 60 stützt.

Die Unterputzdose 50, 50' ist vorzugsweise eine Unterputzdose 50, 50' nach DIN 49073. Die Unterputzdose 50, 50' umfasst eine Außenseite 51 und eine an der Außenseite 51 angeordnete erste Anlagefläche 52. Das Rahmenteil 60 umfasst eine zweite Anlagefläche 63. An der Außenseite 51 der Unterputzdose 50, 50' ist wenigstens ein Vorsprung 53 angeordnet, der von der Außenseite 51 in einer Radialrichtung R nach Außen abragt. Ferner ist an der Außenseite 51 wenigstens ein Absatz 54 vorgesehen, der von der Außenseite 51 in einer Radialrichtung R nach Außen abragt.

Das Rahmenteil 60 weist eine Öffnung 61 auf. Die Öffnung 61 umfasst wenigstens eine erste Ausnehmung 62, durch welche hindurch der Vorsprung 53 in Einbaurichtung E hindurchgesteckt werden kann, wenn die erste Anlagefläche 52 mit der zweiten Anlagefläche 63 in Berühning gebracht wird. Die Öffnung 61 weist ferner wenigstens eine zweite Ausnehmung 68 auf, in welche der Absatz 54 aufgenommen ist, wenn die erste Anlagefläche 52 mit der zweiten Anlagefläche 63 in Berührung ist.

Die Unterputzdose 50, 50' wird mit dem Rahmenteil 60 verbunden, indem die Unterputzdose 50, 50' durch die Öffnung 61 des Rahmenteils 60 in einer Einbaurichtung E bewegt wird, bis die erste Anlagefläche 52 mit der zweiten Anlagefläche 62 in Berührung ist. Dabei wird der Vorsprung 53 durch die erste Ausnehmung 62 hindurchgeführt. Der Absatz 54 ist in der zweiten Ausnehmung 68 aufgenommen. Damit ist die Unterputzdose 50, 50' derart formschlüssig mit dem Rahmenteil 60 verbunden, dass diese nicht mehr weiter in Einbaurichtung E bewegt werden kann. Zudem ist die Unterputzdose somit 50, 50' derart formschlüssig mit dem Rahmenteil 60 verbunden, dass diese in einer quer zur Einbaurichtung E verlaufenden Radialrichtung R festgelegt ist und gegen eine Rotation um eine Achse, die parallel zur Einbaurichtung E verläuft, verdrehsicher festgelegt ist.

An dem Vorsprung 53 kann das Halteelement 80 befestigt werden, beispielsweise durch eine Klipsverbindung. Die Haltefläche 81 ist an dem Rahmenteil 60, insbesondere an einer Unterseite 67 des Rahmenteils, anlegbar, um die Unterputzdose 50 entgegen der Einbaurichtung E formschlüssig festzuhalten.

Das Rahmenteil 60 umfasst einen Anputzabschnitt 65, der sich im Wesentlichen parallel zur Einbaurichtung E erstreckt und im Querschnitt annähernd rechteckig ist. Der Anputzabschnitt 65 ragt von einem Basisabschnitt 64 ab, der in einer quer zur Einbaurichtung E verlaufenden Ebene liegt. Der Anputzabschnitt 65 umfasst eine Randabschnitt 66, der in einer sich quer zur Einbaurichtung E erstreckenden Ebene verläuft und annähernd rechteckig ausgebildet ist. Der Anputzabschnitt 65 dient als Begrenzung, bis zu welcher die Putzschicht 71 auf der Wand 70 aufgetragen wird. Der Randabschnitt 66 dient als Referenz, um zu überprüfen, ob die aufgetragene Putzschicht 71 die gewünschte Dicke hat.

Wie insbesondere die Fign. 1, 4, 5 und 8 veranschaulichen, können die Steckdose 10 und die Steckdosen-Schalter-Kombination 10' wandbündig in einer Wand 70 montiert werden. Dabei wird zumindest die Unterputzdose 50, 50' und das Rahmenteil 60 der Steckdose 10, 10' miteinander verbunden und in einem in die Wand 70 eingebrachten Hohlraum montiert, bevor eine Putzschicht 71 auf die Wand 70 aufgebracht wird. Danach wird die Putzschicht bis zum Anputzabschnitt 65 auf die Wand 70 aufgetragen, bis die Putzschicht 71 die gewünschte Dicke und bündig mit dem Randabschnitt 66 ist. Im Anschluss kann die Steckdose 10 zusammengefügt werden, indem der Sockelteil 40, der Designrahmen 30, und das Steckdosenzentralstück 20 in die Unterputzdose 50, 50' eingebaut werden.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Elektrische Installationsvorrichtung für wandbündigen Einbau umfassend:
wenigstens eine Unterputzdose (50, 50') mit einer Außenseite (51) und einer an der Außenseite (51) angeordneten ersten Anlagefläche (52),
ein Rahmenteil (60) mit einer zweiten Anlagefläche (63), die zumindest abschnittsweise eine zu der ersten Anlagefläche (52) komplementäre Fläche bildet, und
einer Einbaurichtung (E),
wobei die erste Anlagefläche (52) durch eine Bewegung der Unterputzdose (50, 50') in Einbaurichtung (E) mit der zweiten Anlagefläche (63) in Berührung bringbar ist.

2. Elektrische Installationsvorrichtung nach Anspruch 1, **dadurch gekennzeichnet, dass** die erste Anlagefläche (52) und die zweite Anlagefläche (63) zumindest abschnittsweise annähernd parallel zueinander verlaufen.

3. Elektrische Installationsvorrichtung nach Anspruch 2, **dadurch gekennzeichnet, dass** die erste Anlagefläche (52) und die zweite Anlagefläche (63) zumindest abschnittsweise annähernd parallel zu einer Kegelmantelfläche und/oder einer Sphäre verlaufen.

4. Elektrische Installationsvorrichtung nach einem der Ansprüche 1 bis 3, **dadurch gekennzeichnet, dass** das Rahmenteil (60) eine Öffnung (61) aufweist, durch welche die Unterputzdose (50, 50') zumindest teilweise in Einbaurichtung (E) hindurchsteckbar ist, um die erste Anlagefläche (52) mit der zweiten Anlagefläche (63) in Berührung zu bringen, wobei vorzugsweise die Öffnung (61) zumindest abschnittsweise annähernd kreisförmig und/oder zumindest abschnittsweise annähernd kreisbogenförmig ausgebildet ist.

5. Elektrische Installationsvorrichtung nach einem der Ansprüche 1 bis 4, **dadurch gekennzeichnet, dass** die Unterputzdose (50, 50') wenigstens ein Befestigungselement (53) aufweist, wobei vorzugsweise die Installationsvorrichtung (10) wenigstens ein Halteelement (80) mit einer Haltefläche (81) umfasst und wobei das Halteelement (80) an dem Befestigungselement (53) befestigbar ist und die Haltefläche (81) an dem Rahmenteil (60) anlegbar ist, um die Unterputzdose (50, 50') entgegen der Einbaurichtung (E) formschlüssig festzuhalten.

6. Elektrische Installationsvorrichtung nach Anspruch 5, **dadurch gekennzeichnet, dass** das Befestigungselement (53) durch einen von der Außenseite (51) in Radialrichtung (R) abragenden Vorsprung (53) gebildet ist.

7. Elektrische Installationsvorrichtung nach Anspruch 6, **dadurch gekennzeichnet, dass** die Öffnung (61) wenigstens eine erste Ausnehmung (62) aufweist, durch welche der Vorsprung (53) in Einbaurichtung (E) hindurchsteckbar ist.

8. Elektrische Installationsvorrichtung nach einem der Ansprüche 1 bis 7, **dadurch gekennzeichnet, dass** das Rahmenteil (60) einen Basisabschnitt (64) umfasst, der im Wesentlichen quer zur Einbaurichtung (E) verläuft, wobei vorzugsweise die Öffnung (61) in dem Basisabschnitt (64) angeordnet ist.

9. Elektrische Installationsvorrichtung nach den Ansprüchen 5 bis 7 und Anspruch 8, **dadurch gekennzeichnet, dass** die Haltefläche (81) an eine Unterseite (67) des Basisabschnitts (64), vorzugsweise benachbart zur ersten Ausnehmung (62), anlegbar ist, um die Unterputzdose (50, 50') entgegen der Einbaurichtung (E) formschlüssig festzuhalten.

10. Elektrische Installationsvorrichtung nach einem der Ansprüche 1 bis 9, **dadurch gekennzeichnet, dass** das Rahmenteil (60) einen Anputzabschnitt (65) umfasst, der im Wesentlichen parallel zur Einbaurichtung (E) verläuft, wobei vorzugsweise der Anputzabschnitt (65) einen Randabschnitt (66) bildet, der im Wesentlichen in einer quer zur Einbaurichtung (E) verlaufenden Ebene liegt.

11. Elektrische Installationsvorrichtung nach einem der Ansprüche 1 bis 10, **gekennzeichnet durch** eine zweite Unterputzdose (50'), die mit der Unterpuzudose (50) verbunden ist, wobei vorzugsweise die zweite Unterputzdose (50') einen Vorsprung (52) aufweist, der mit einem Vorsprung (53) der Unterputzdose (50) verbunden ist.

12. Verfahren zur Montage einer elektrischen Installationsvorrichtung (10, 10') nach einem der Ansprüche 1 bis 11 an ein Bauteil (70), vorzugsweise an eine Wand (70), weiterhin vorzugsweise an eine Rohbauwand (70), umfassend folgende Verfahrensschritte:
Verbinden der Unterputzdose (50, 50') mit dem Rahmenteil (60) durch in Berühning bringen der ersten Anlagefläche (52) mit der zweiten Anlagefläche (63);
Verbinden der Installationsvorrichtung (10, 10') mit einem in dem Bauteil (70) eingebrachten Hohlraum;

13. Verfahren zur Montage nach Anspruch 12, **dadurch gekennzeichnet, dass** nach dem Verbinden der Unterputzdose (50, 50') mit dem Rahmenteil (60) und vor dem Verbinden der Installationsvorrichtung (10) mit dem Hohlraum die Unterputzdose (50, 50') formschlüssig mit dem Rahmenteil (60) verbunden wird, sodass die Unterputzdose (50, 50') entgegen der Einbaurichtung (E) an dem Rahmenteil (60) festgehalten wird.

14. Verfahren zur Montage nach Anspruch 13, **dadurch gekennzeichnet, dass** die Unterputzdose (50, 50') formschlüssig mit dem Rahmenteil (60) verbunden wird, indem wenigstens ein Halteelement (80) mit einem Befestigungselement (53) der Unterputzdose (50, 50') verbunden wird.

15. Verfahren zur Montage nach Anspruch 14, **dadurch gekennzeichnet, dass** nach dem Verbinden der Installationsvorrichtung (10) mit dem Hohlraum an dem Bauteil (70) umfänglich um das Rahmenteil (60) eine Putzschicht (71) aufgebracht wird, wobei vorzugsweise die Putzschicht (71) umfänglich um einen Anputzabschnitt (65) des Rahmenteils an dem Bauteil (70) aufgebracht wird, wobei weiterhin vorzugsweise die Putzschicht (71) in Einbaurichtung (E) bis zu einem Randabschnitt (66) des Anputzabschnitts (65) aufgebracht wird.
